# EUROPEAN PATENT SPECIFICATION

(11) **EP 2 843 813 B1**
(45) Date of publication and mention of the grant of the patent: **07.06.2023**
(21) Application number: 13190963.2
(22) Date of filing: 30.10.2013
(51) Int. Cl.: H02K 35/02, H02K 7/18, A63G 31/00

(54) **Reciprocating generator able to power interactive appliances in playground equipment**
Reziprokierender Generator geeignet für die Stromversorgung interaktiver Geräte in Spielplatzgeräten
Alternateur à mouvement alternatif capable d'alimenter les appareils interactifs incorporés dans les équipements de jeux

(30) Priority: 30.08.2013 US 201314016041
(43) Date of publication of application: 04.03.2015
(73) Proprietor: Playground Energy Ltd, Sofia (BG)
(72) Inventor: Aleksiev, Hristo, Sofia (BG); Milinov, Ilian, Sofia 1113 (BG)
(74) Representative: Hutchinson, Thomas Owen

(56) References cited:
- WO-A1-2005/031952
- WO-A1-2009/125328
- US-A- 4 140 932
- US-A1- 2008 074 083
- US-A1- 2009 134 721
- US-A1- 2013 015 667

## Description

This invention relates to a device for powering interactive appliances in moving playground equipment, and in particular, but without limitation, to such a device installed at children's playgrounds, children's establishments or in the home. Embodiments of the invention could, for example, be used on roundabouts, swings, seesaws, climbing walls, bicycles, treadmills, trampolines and other similar equipment with moving parts.

It is becoming increasingly common nowadays for playground equipment to include interactive appliances, such as lights, visual displays, sounds and mechanical feedback, which respond to inputs made by users of the equipment. For example, a roundabout may include a light array, whose brightness and/or flashing frequency; or a sound effect whose volume and/or pitch; changes in response to a detected speed of the roundabout. Electrically-powered interactive elements such as these necessarily need to be connected to a supply of electricity and it is known to power such devices directly from a mains power supply. However, such an approach is generally contraindicated due to the proximity of mains power, rainwater and children, and so relatively low-voltage systems have been developed that operate using battery power, which battery can be recharged using, for example, photovoltaic cells, or by electro-mechanical transducers operatively connected to the equipment itself.

A known power supply for playground equipment uses rechargeable batteries and a direct current electrical generator connected to an element exhibiting a cyclic motion on a playground structure. The generator comprises a mechanical linkage, ratchet and/or gearing arrangement that drives an input shaft of a rotary generator as the playground equipment reciprocates or moves. Attached to the generator, there is a controller and during children's play, the cyclic-moving element drives the generator by means of its repetitive motion. Together the generator and the controller transform part of the kinetic energy of the cyclic-moving element into electrical power. The generated electricity is stored in batteries and is used to power mobile lights via a charging station. Drawbacks to the known device are its complex structure and the large loss of energy within the mechanical part of the device which transforms the motion of the respective elements into the rotary motion of the electrical generator's shaft.

Examples of power generation systems are given below:
Published document US2013015667 discloses a power generation system, in which a magnet is configured to move within a tube and coils are provided outside of the tube, wherein upon a detonation impulse derived from a detonation impulse device the magnet and power is generated by way of the movement of the magnet relative to the coil.

Published document WO200503152 discloses an electrical generator comprising a plurality of magnets configured to move relative to a coil to generate an electrical signal.

Published document US2008074083 discloses a self-charging battery, in which a magnetic structure is configured to generate a compressed magnetic field and a coil is configured to focus the compressed magnetic field in electrical conductive elements of the coil.

Published document US2009/134721 discloses an electromagnetic transducer in which electrical inputs applied via a set of coils are converted into movement of a magnet to produce vibration.

Published document US20090134721 discloses an MRI-safe electromagnetic transducer, in which a captive magnet moves in response to motion of the transducer by compressing retainers. The movement of the magnet induces a current in electrically connected coils, which results in a voltage output.

Published document WO2009125328 discloses a playground appliance comprising a motion powered unit, which can be a piezoelectric, a dynamo or an induction coil.

Published document US4140932 discloses a power generator in which an axially polarized magnet moves through a single coil with opposite-handed coil portions so as to generate a voltage output.

It is therefore known to use a moveable magnet to induce a voltage in a coil so as to produce electrical energy from movement, and this can be achieved in various ways.

A need therefore exists for an improved and/or an alternative power generation system that is suitable for use with playground equipment and/or one which addresses and/or overcomes one or more of the problems outlined above.

Aspects of the invention are set forth it the appended claims.

The invention therefore differs from the prior art identified above insofar as it comprises a plurality of coils separated by electrically insulative spacers; by the fact that the magnet is free to slide freely within the tube; by virtue of the fact that the rebound of the magnet within the tube is caused by the rubber end stops or rebound elements; and by a weather tight and/or waterproof casing that at least partially surrounds or encases the tube and/or coils and/or terminals. The invention thus provides an alternative solution to the problem of how to generate electrical energy from movement in an outdoor environment.

Suitably, the electro-mechanical transducer can thus provide a useful electrical output in direct response to movement thereof, thus avoiding the need for a mechanical interface between a moving item and the transducer.

Suitably, the electro-mechanical transducer comprises an electrical generator, which can be affixed to playground equipment that moves, in use. Suitably, the electro-mechanical transducer comprises a main body portion, or casing, that at least partially surrounds or encases the tube and/or coils and/or terminals. The casing is weather tight and/or waterproof, and may be submersible and/or IP-rated. Additionally or alternatively, the casing may be tamperproof to inhibit and/or prevent unauthorized and/or unintentional access to the interior components thereof.

The tube is manufactured of an electrically insulating material, such as a polymeric material.

The plurality of coils at least partially surround, but preferably encircle, the tube and are separated by electrically insulative spacers. The spacers may comprise polymeric sleeves or rings that locate around the tube.

The magnet suitably comprises a permanent magnet, and is suitably substantially cylindrical in shape to fit within the tube. The outer diameter of the magnet is suitably slightly smaller than the inner diameter of the tube to enable it to slide freely within the tube in response to movement thereof. The magnet and/or tube may comprise a low-frication coating, such as a PTFE coating, or a low-viscosity lubricant, to facilitate sliding of the magnet within the tube.

The spaced-apart end-stop elements comprise resiliently deformable elements against which the magnet abuts at the extent of its movement within the tube. The resiliently-deformable end-stop elements comprise rubber end-stops or plugs.

The provision of end-stop elements gives rise to two main advantages: firstly, the sound of the magnet colliding with the end of the interior of the tube is avoided, damped and/or silenced; and secondly, the kinetic energy of the magnet is reversed, i.e. the end-stop elements rebound the magnet to travel in an opposite direction along the tube, thereby conserving (kinetic and/or potential) energy within the system.

The electrical terminals are operatively connected to the coils. A set of electrical terminals is provided for each individual coil, or the coils may be interconnected in sets to a common set of terminals.

Any number of coils may be provided, although in certain embodiments, the number of coils is between 2 and 15 coils.

Suitably, the device for powering interactive appliances in moving playground equipment includes an electrical generator mounted onto the moving element of the equipment. Suitably, the electrical generator comprises a case on the inside of which there is fixed a tube made out of an insulating material. Suitably, on the periphery surface of the tube there are fixed n number of coils connected in series and/or parallel, where n is greater than one. Suitably, adjacent coils are divided by separating insolating elements. Suitably, inside the tube it is placed a permanent cylindrical magnet allowing for its sidestep movement along the tube. Suitably, at the two ends of the tube there are fixed rebound elements off which the permanent cylindrical magnet bounces. Suitably, the number of coils n is from 2 to 15.

The advantages of the device are its simplified structure, the reduced waste of energy, the ability for operation with different moving playground equipment such as swings, seesaws, trampolines and others, as well as with mobile play equipment and toys shaped like animals, automobiles, etc., for use in children's establishments and at home. It also allows for the attachment of various interactive appliances which produce visual and sound effects for the enhancement of kids' positive experiences.

Embodiments of the invention shall now be described, by way of example only, with reference to the accompanying drawings in which:
Figure 1 is a wireframe perspective view of an electro-mechanical transducer in accordance with the invention;
Figure 2 is an axonometric, exploded projection of the device of Figure 1;
Figure 3.1 is a schematic circuit diagram illustrating the coils of the device connected in parallel to an interactive appliance;
Figure 3.2 is a schematic circuit diagram illustrating the coils of the device connected in series to an interactive appliance;
Figure 3.3 is a schematic circuit diagram illustrating the coils of the device connected to interactive appliances as single coils;
Figure 4 is a perspective view of a swing fitted with an embodiment of an electro-mechanical transducer in accordance with the invention;
Figure 5 Figure 4 is a perspective view of a seesaw fitted with an embodiment of an electro-mechanical transducer in accordance with the invention;
Figure 6 Figure 4 is a partially exploded perspective view of a spring toy fitted with an embodiment of an electro-mechanical transducer in accordance with the invention; and
Figure 7 is a side view and a perspective view from below of a trampoline fitted with an electro-mechanical transducer in accordance with the invention.

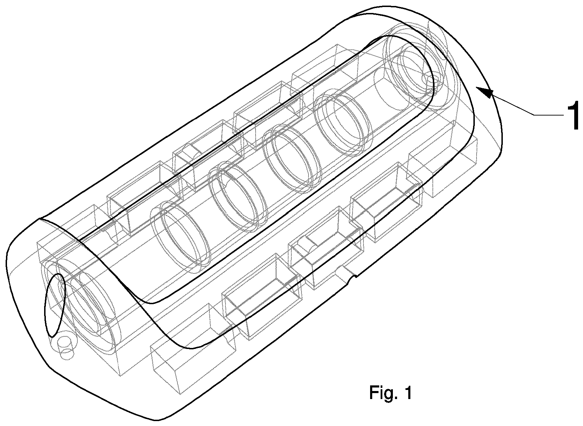

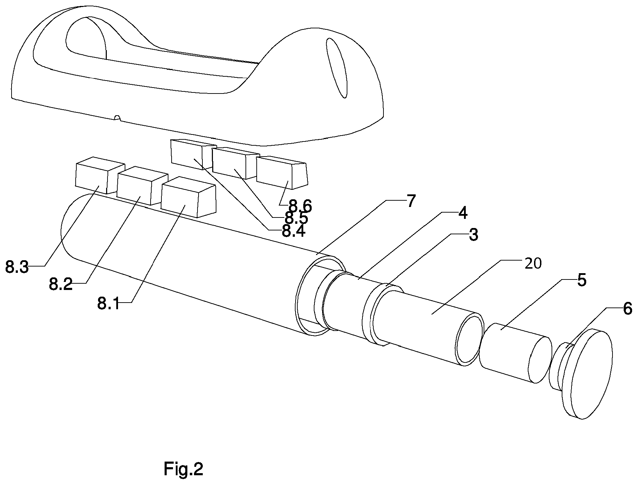

In Figures 1 and 2, an embodiment of the invention comprises case 1 on the inside of which there is fixed a tube 20 made out of an insulating material. On the periphery surface of the tube 20 there are fixed four coils 4. The coils are divided from one another by separating insolating elements 3, where depending on the voltage or current required by the interactive appliance, the coils 4, can be arranged in groups connected in series or in parallel to each other. Inside the tube 20 it is placed a permanent cylindrical magnet 5 allowing for its sidestep (reciprocal sliding) movement along the tube 20. At the two ends of the tube 20 there are fixed rebound elements 6 off which the permanent cylindrical magnet 5 bounces. The elements 6 are formed using rubber plugs.

Surrounding the tube 20, coils 4 and spacers 3 is an outer tube 7 against an end of which the rebound elements 6 sealingly abut to form a watertight enclosure.

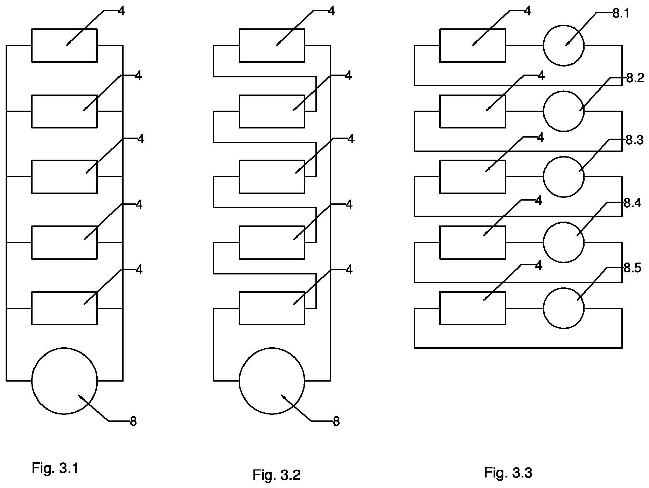

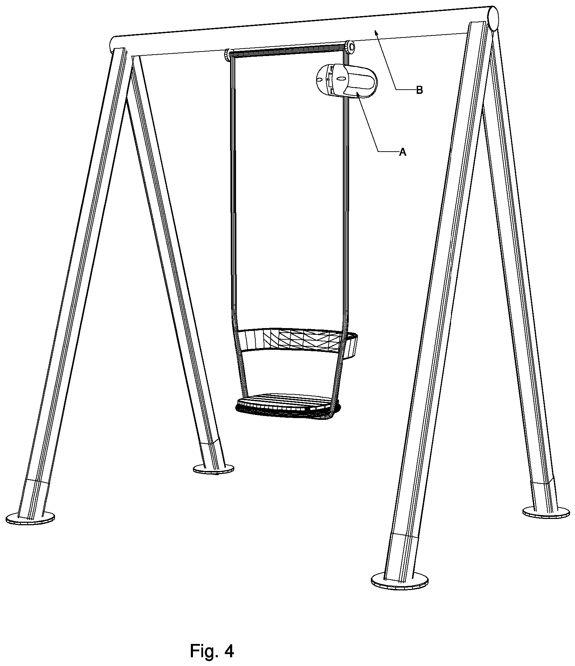

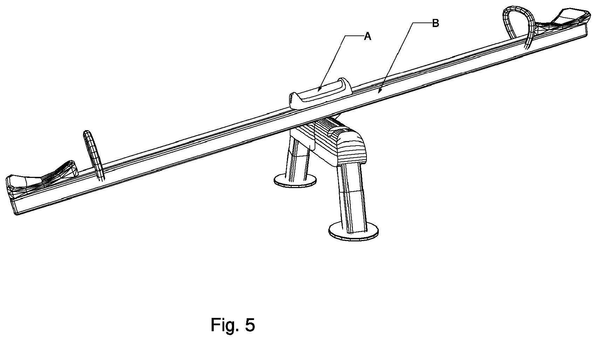

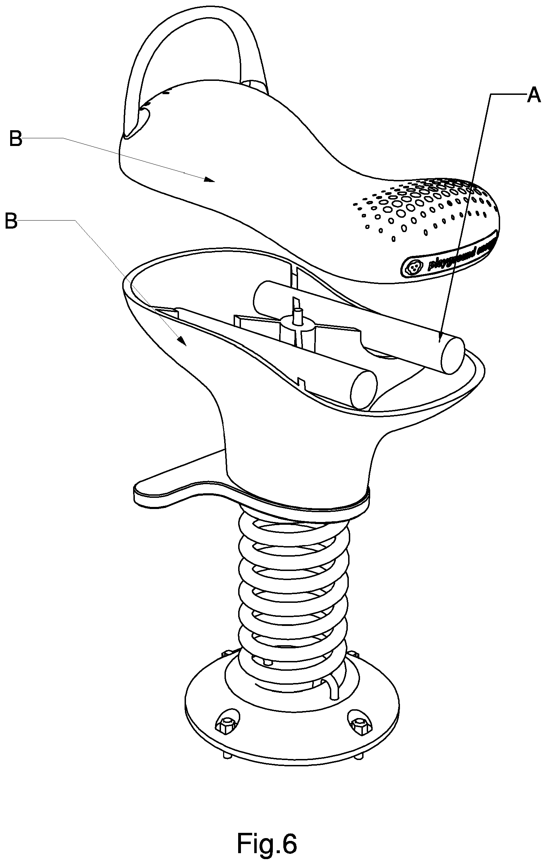

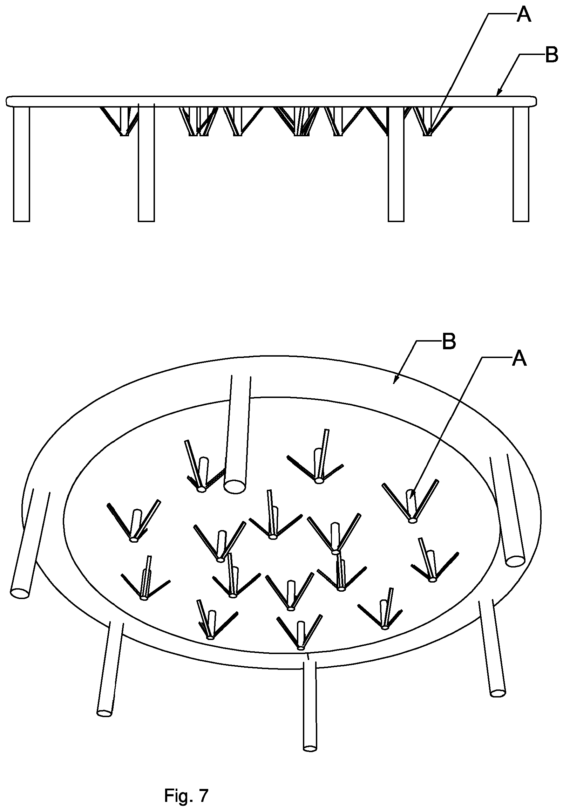

The terminals of single coils or a group of connected coils 4, as shown in Figures 3.1, 3.2 and 3.3, are terminals of the powering device, connected to the various interactive appliances 8.1, 8.2, 8.3, 8.4, 8.5 and 8.6, such as a light emitter, sound emitter, camera, Wi-Fi device or projector. The powering device A is mounted onto the movable element of various moving playground equipment B, like a swing (Fig. 4), seesaw (Fig. 5), spring toy (Fig. 6) or trampoline (Fig. 7) whose movement result in the sidestep motion of the permanent magnet 5.

By rocking the toy (the swing, the trampoline etc.) the permanent cylindrical magnet 5 moves along the tube and by this motion electrical potential is being induced in the coils 4 which are arranged around the tube 20. The potential generated in the coils 4 is channeled as to power some of the attached interactive appliances 8, such as light emitter 8.1, sound emitter 8.2, camera 8.4, Wi-Fi device 8.5, projector 8.6 etc. When the magnet 5 is at the end position, the respective rebound element 6 pushes the magnet 5 in the opposite direction.

The invention concerns a device for powering interactive appliances in moving playground equipment for use at children's playgrounds, children's establishments or at home. The device includes an electrical generator mounted onto the moving element of the equipment. The electrical generator comprises a case on the inside of which there is fixed a tube made out of an insulating material. On the periphery surface of the tube there are fixed n number of coils connected in series and/or parallel, where n is greater than one. Adjacent coils are divided from each other by separating insolating elements. Inside the tube it is placed a permanent cylindrical magnet allowing for its sidestep movement along the tube. At the two ends of the tube there are fixed rebound elements off which the permanent cylindrical magnet bounces. The number of coils n is from 2 to 15.

The rebound elements can be formed using permanent magnets with their opposite poles aimed toward the cylindrical magnet, using rubber plugs, spring or elastic non-magnetic elements etc. The advantages of the device are its simplified structure, the reduced waste of energy, the ability for operation with different moving playground equipment such as swings, seesaws, trampolines and others, as well as with mobile play equipment and toys shaped like animals, automobiles, etc., for use in children's establishments and at home. It also allows for the attachment of various interactive appliances which produce visual and sound effects for the enhancement of kids' positive experiences.

The device can be used on roundabouts, swings, seesaws, climbing walls, bicycles, treadmills, trampolines and other similar equipment with moving parts. The device contains an electrical generator mounted onto the movable element of the equipment. The electrical generator comprises a case 1 on the inside of which there is fixed a tube 20 made out of an insulating material, on the periphery surface of the tube there are fixed n number of coils 4, where n is greater than one. The coils 4 are divided from each other by separating insolating elements 3. Inside the tube 20 it is placed a permanent cylindrical magnet 5 allowing for its sidestep movement along the tube. At the two ends of the tube 20 there are fixed rebound elements 6.

The terminals of single coils 4 or a group of connected coils 4 are terminals of the powering device, connected to the interactive appliances. The advantages of the device are its simplified structure, the reduced waste of energy, the ability for operation with different moving playground equipment such as swings, seesaws, trampolines and others, as well as mobile play equipment and toys shaped like animals, automobiles, etc., for use in children's establishments and at home. It also allows for the attachment of various interactive appliances which produce visual and sound effects for the enhancement of children's positive experiences.

## Claims

1. An electro-mechanical transducer (A) suitable for use as a power generator for powering interactive appliances in moving playground equipment when affixed to a moving part of said playground equipment, the electro-mechanical transducer (A) comprising:
a tube (20) manufactured of an electrically insulating polymeric material;
a plurality of coils (4) at least partially surrounding the tube (20);
a set of electrical terminals for each coil (4), connections between the electrical terminals permitting the coils to be connected individually, or connected in groups in series or in parallel;
an electrically insulative polymeric spacer (3) interposed between adjacent coils (4);
a cylindrical magnet (5) the outer diameter of which is smaller than an inner diameter of the tube (20) to enable the magnet (5) to slide within the tube (20) in response to movement of the tube (20);
spaced-apart, end-stop elements (6) located within the tube (20) on opposite sides of the magnet (5) for limiting the extent movement of the magnet (5) within the tube (20); and
the end-stop elements (6) being rubber end-stops or rubber plugs against which the magnet (5) abuts at the extent of its movement within the tube (20);
motion of the tube (20) causing the magnet (5) to slide freely therewithin between the end-stop elements and to induce an electrical current in one or more of the coils (4) to provide a respective electrical power output at the terminals; and
the electro-mechanical transducer (A) further comprising a weather tight and/or waterproof casing (7) that at least partially surrounds or encases the tube (20) and/or coils (4) and/or terminals.

2. An electro-mechanical transducer (A) as claimed in claim 1, wherein the spacers (3) comprise polymeric sleeves or rings that locate around the tube (20).

3. An electro-mechanical transducer (A) as claimed in any preceding claim, wherein any one or both of the magnet (5) and tube (20) comprises any one or more of the group comprising: a PTFE coating; and a lubricant.

4. An electro-mechanical transducer (A) as claimed in any preceding claim, wherein the electrical terminals are operatively connected to the coils (4) individually.

5. An electro-mechanical transducer (A) as claimed in any of claims 1, 2 or 3, wherein the electrical terminals are operatively connected to electrically interconnected groups of coils (4).

6. An electro-mechanical transducer (A) as claimed in any preceding claim, wherein the number of coils (4) is between 2 and 15 coils (4).

7. Moving playground equipment comprising:
an interactive appliance; and
an electro-mechanical transducer (A) according to any preceding claim powering the interactive appliance, and being mounted onto a moving element of the moving playground equipment,
the moving playground equipment comprising any one or more of the group comprising: a swing; a seesaw; a trampoline; a roundabout; a spring toy; a climbing wall; a bicycle; and a treadmill, and
the interactive appliance being any one or more of the group comprising: a light emitter (8.1); sound emitter (8.2); a camera (8.4); a Wi-Fi device (8.5); and a projector (8.6) which responds to inputs made by users of the moving playground equipment.

## Patentansprüche

1. Elektromechanischer Wandler (A), der zur Verwendung als Stromerzeuger zur Stromversorgung interaktiver Geräte in beweglichen Spielgeräten geeignet ist, wenn er an einem beweglichen Teil dieses Spielplatzgeräts angebracht ist, der elektromechanische Wandler (A) umfasst:
ein Rohr (20) aus einem elektrisch isolierenden Polymermaterial;
mehrere Spulen (4), die das Rohr zumindest teilweise umgeben (20);
eine Reihe von elektrischen Klemmen für jede Spule (4), Verbindungen zwischen den elektrischen Klemmen, die es ermöglichen, die Spulen einzeln oder in Gruppen in Reihe oder parallel zu verbinden;
ein elektrisch isolierender polymerer Abstandhalter (3), der zwischen benachbarten Spulen (4) angeordnet ist;
ein zylindrischer Magnet (5), dessen Außendurchmesser kleiner als ein Innendurchmesser des Rohres (20) ist, damit der Magnet (5) als Reaktion auf die Bewegung des Rohres (20) innerhalb des Rohres (20) gleiten kann;
voneinander entfernte Endanschlagelemente (6), die sich innerhalb der Röhre (20) auf gegenüberliegenden Seiten des Magneten (5) befinden, um die Ausdehnungsbewegung des Magneten (5) innerhalb des Rohres (20) zu begrenzen; und
die Endanschlagelemente (6) sind Gummiendanschläge oder Gummistopfen, gegen die der Magnet (5) im Ausmaß seiner Bewegung innerhalb des Rohres (20) anstößt;
Bewegung der Röhre (20), wodurch der Magnet (5) darin frei zwischen den Endanschlagelementen gleitet und in einer oder mehreren der Spulen (4) einen elektrischen Strom induziert, um eine entsprechende elektrische Leistung an den Klemmen bereitzustellen; und
der elektromechanische Wandler (A) umfasst ferner ein wetterdichtes und/oder wasserdichtes Gehäuse (7), das die Röhre (20) und/oder die Spulen (4) und/oder Anschlüsse zumindest teilweise umgibt oder umhüllt.

2. Elektromechanischer Wandler (A) nach Anspruch 1, wobei die Abstandshalter (3) polymere Hülsen oder Ringe umfassen, die sich um das Rohr (20) befinden.

3. Elektromechanischer Wandler (A) nach einem beliebigen vorhergehenden Anspruch, wobei einer oder beide Magneten (5) und Röhre (20) eine oder mehrere der Gruppe umfassen: eine PTFE-Beschichtung; und ein Gleitmittel.

4. Elektromechanischer Wandler (A) im Sinne eines vorhergehenden Anspruchs, wobei die elektrischen Klemmen operativ mit den Spulen (4) einzeln verbunden sind.

5. Elektromechanischer Wandler (A) nach einem der Ansprüche 1, 2 oder 3, wobei die elektrischen Klemmen operativ mit elektrisch miteinander verbundenen Gruppen von Spulen (4) verbunden sind.

6. Elektromechanischer Wandler (A) nach einem beliebigen vorhergehenden Anspruch, wobei die Anzahl der Spulen (4) zwischen 2 und 15 Spulen (4) liegt.

7. Bewegliche Spielgeräte bestehend aus:
ein interaktives Gerät; und
ein elektromechanischer Wandler (A) nach einem vorhergehenden Anspruch, der das interaktive Gerät mit Strom versorgt und an einem beweglichen Element des beweglichen Spielplatzgeräts angebracht ist,
bewegliche Spielplatzgeräte, bestehend aus einem oder mehreren Gruppengeräten, bestehend aus: einer Schaukel; eine Wippe; ein Trampolin; ein Kreisverkehr; ein Frühlingsspielzeug; eine Kletterwand; ein Fahrrad; und ein Laufband und
das interaktive Gerät eines oder mehrere der Gruppen, bestehend aus: einem Lichtstrahler (8.1); Schallstrahler (8.2); eine Kamera (8.4); ein Wi-Fi-Gerät (8.5); und ein Projektor (8.6), der auf Eingaben von Benutzern der beweglichen Spielgeräte reagiert.

## Revendications

1. Un transducteur électromécanique (A) apte à être utilisé comme générateur d'énergie pour alimenter des appareils interactifs dans des équipements de terrain de jeux mobiles lorsqu'il est fixé à une partie mobile dudit équipement de terrain de jeux, le transducteur électromécanique (A) comprenant:
un tube (20) fabriqué en matériau polymère électriquement isolant;
une pluralité de bobines (4) entourant au moins partiellement le tube (20);
un ensemble de bornes électriques pour chaque bobine (4), connexions entre les bornes électriques permettant de connecter les bobines individuellement, ou de les connecter en groupes en série ou en parallèle;
un espaceur polymère électriquement isolant (3) interposé entre des bobines adjacentes (4);
un aimant cylindrique (5) dont le diamètre extérieur est inférieur à un diamètre intérieur du tube (20) pour permettre à l'aimant (5) de glisser à l'intérieur du tube (20) en réponse au mouvement du tube (20);
éléments espacés et butoirs (6) situés à l'intérieur du tube (20) sur les côtés opposés de l'aimant (5) pour limiter l'étendue du mouvement de l'aimant (5) à l'intérieur du tube (20); et
les butées d'extrémité (6) étant des butées d'extrémité ou des bouchons en caoutchouc contre lesquels l'aimant (5) bute à l'étendue de son mouvement à l'intérieur du tube (20);
mouvement du tube (20) faisant glisser librement l'aimant (5) à l'intérieur de celui-ci entre les éléments d'extrémité et induisant un courant électrique dans une ou plusieurs des bobines (4) pour fournir une puissance de sortie électrique respective aux bornes; et
le transducteur électromécanique (A) comprenant en outre un boîtier étanche aux intempéries et/ou étanche (7) qui entoure ou enveloppe au moins partiellement le tube (20) et/ou les bobines (4) et/ou les bornes.

2. Transducteur électromécanique (A) selon la revendication 1, dans lequel les entretoises (3) comprennent des manchons ou des anneaux polymères qui se situent autour du tube (20).

3. Transducteur électromécanique (A) tel que revendiqué dans l'une quelconque des revendications précédentes, dans lequel l'un quelconque ou les deux aimants (5) et tubes (20) comprennent un ou plusieurs des groupes comprenant : un revêtement PTFE ; et un lubrifiant.

4. Transducteur électromécanique (A) tel que revendiqué dans l'une quelconque des revendications précédentes, dans lequel les bornes électriques sont connectées de manière opératoire aux bobines (4) individuellement.

5. Transducteur électromécanique (A) tel que revendiqué dans l'une quelconque des revendications 1, 2 ou 3, dans lequel les bornes électriques sont connectées de manière opérationnelle à des groupes de bobines électriquement interconnectés (4).

6. Capteur électromécanique (A) tel que revendiqué dans l'une quelconque des revendications précédentes, dans lequel le nombre de bobines (4) est compris entre 2 et 15 bobines (4).

7. Équipement de terrain de jeu mobile comprenant:
un appareil interactif; et
un transducteur électromécanique (A) selon l'une quelconque des revendications précédentes alimentant l'appareil interactif et étant monté sur un élément mobile de l'équipement mobile du terrain de jeu,
l'équipement de terrain de jeu mobile comprenant un ou plusieurs membres du groupe comprenant: une balançoire; une balançoire à bascule; un trampoline; un carrefour giratoire; un jouet de printemps; un mur d'escalade; un vélo; et un tapis roulant, et
l'appareil interactif étant un ou plusieurs des membres du groupe comprenant: un émetteur de lumière (8.1); émetteur sonore (8,2); une caméra (8,4); un appareil Wi-Fi (8,5); et un projecteur (8.6) qui répond aux entrées effectuées par les utilisateurs de l'équipement de terrain de jeu en mouvement.
